Europäisches Patentamt

(19) European Patent Office

Office européen des brevets

(11) Veröffentlichungsnummer: **0 205 418**

**A1**

(12) # EUROPÄISCHE PATENTANMELDUNG

(21) Anmeldenummer: 86890172.9

(22) Anmeldetag: 10.06.86

(51) Int. Cl.⁴: **A 01 D 45/06**
**A 01 D 34/00**

(30) Priorität: 11.06.85 AT 1738/85

(43) Veröffentlichungstag der Anmeldung:
17.12.86 Patentblatt 86/51

(84) Benannte Vertragsstaaten:
BE DE FR GB IT NL

(71) Anmelder: Gschwandtner, Friedrich
Schüttgasse 4
A-9560 Feldkirchen(AT)

(72) Erfinder: Gschwandtner, Friedrich
Schüttgasse 4
A-9560 Feldkirchen(AT)

(74) Vertreter: Puchberger, Rolf, Dipl. Ing.
Patentanwälte, Dipl. Ing. Georg Puchberger Dipl. Ing.
Rolf Puchberger Dipl. Ing. Peter Puchberger
Singerstrasse 13 Postfach 55
A-1010 Wien(AT)

(54) **Faserflachsernteverfahren und Anordnung zur Durchführung des Verfahrens.**

(57) Zum Ernten von Faserflachs werden die Faserflachspflanzen aufgerichtet und entwirrt, dann in einem Abstand vom
Boden gemäht und die gemähten Faserflachspflanzen werden auf dem so gebildeten Stoppelfeld abgelegt, wobei dann
nach gegebener Zeit eine Weiterbehandlung erfolgen kann.
Um dieses Verfahren durchzuführen, wird vorgeschlagen, an
einem Traktor (1) ein Mähwerk (2) anzuordnen, an das Teilerleitbögen (4) korbartig zusammengefaßt angebaut sind. Vor
dem Mähwerk (2) sind Einrichtungen zum Trennen der einzelnen Faserflachsstengel und eine Haspel (10) angeordnet, wohingegen hinter dem Mähwerk eine Prallwand vorgesehen
ist. Parallel zur Prallwand (12) ist mindestens ein Förderband
(7) mit Mitnehmern (8) vorgesehen, das über das Mähwerk (2)
und den Traktor (1) hinausragt und an einem Führungsblech
(13) endet.

Fig.1

Die Erfindung betrifft ein Faserflachsernteverfahren und eine
Anordnung zur Durchführung dieses Verfahrens.

Derzeit wird Flachs geerntet, indem man die Pflanzen aus dem Ackerboden in mehr oder weniger großen Bündeln ausreißt. Zu diesem Zweck
sind auch eigene Maschinen, sogenannte Raufmaschinen entwickelt
worden. Der geerntete Flachs ist durch die Wurzeln und Erdklumpen
stark verunreinigt, was sich bei den nachfolgenden, für die Flachsverarbeitung notwendigen Arbeitsvorgängen als sehr nachteilig erweist. Durch das Herausreißen der Flachsstengel aus dem Ackerboden
entstehen am Flachsstengel starke mechanische Belastungen, hauptsächlich Quetschungen und überdies bringt die mit dem Herausreißen
der Flachsstengel verbundene Aufwühlung des Ackerbodens noch zusätzliche starke Verschmutzungen der auf den Feldern abgelegten Flachsstengel. Ferner ist für das Ausreißen der Flachsstengel ein sehr
großer Leistungsaufwand erforderlich, was dazu führt, daß schwere
Maschinen eingesetzt werden müssen, und daß diese Maschinen nur auf
annähernd ebenem Gelände einsetzbar sind.

Bei den heute bekannten Verfahren und Arbeitsaggregaten wird ferner
der Flachs nach dem Au reißvorgang derart auf den Ackerboden gelegt,
daß dieser vollflächig bedeckt ist und somit beim Befahren für die
weiteren Arbeitsgänge ein Teil des ausgebreiteten Flachses niedergefahren wird. Außerdem stellt der kahle Ackerboden keinen idealen
Trocknungsplatz für den ausgebreiteten Flachs dar.

Die mit Wurzel und Ackererde oder sonstigen Erdverschmutzungen belasteten, abgelagerten Flachsstengel und die sich beim Herausreißen
ergebenden Beschädigungen bedeuten für das Trocknen und Rösten der
Flachsstengel eine starke Erschwernis. In der Faseraufbereitung ergeben sich daraus starke Einschränkungen der Produktionsgeschwindigkeiten, erhebliche Abnützung der belasteten Maschinenteile, Faserschädigungen, eine enorme Staubentwicklung in allen Arbeitsstufen
und daraus Luft- und Abwasserbelastungen.

Es wird nun bei einem Faserflachsernteverfahren vorgeschlagen, daß
die Faserflachspflanzen aufgerichtet und entwirrt werden, daß dann
die Faserflachspflanzen im Abstand über dem Boden gemäht und die
gemähten Faserflachspflanzen auf dem so gebildeten Stoppelfeld abgelegt werden, wobei dann nach gegebener Zeit eine Verarbeitung erfolgt.

Eine Anordnung zur Durchführung des Verfahrens ist dadurch gekennzeichnet, daß an einem Traktor in an sich bekannter Weise ein Mähwerk angeordnet ist, an das Teilerleitbögen korbartig zusammengefaßt angebaut
sind, daß vor dem Mähwerk Einrichtungen zum Trennen der Stengel voneinander, wie Trennkonusse, und eine Haspel angeordnet sind, daß hinter
dem Mähwerk eine Prallwand vorgesehen ist, daß parallel zur Prallwand
mindestens ein Förderband mit Mitnehmern vorgesehen ist und daß an der
Umlenkstelle des oder der Förderbänder ein Führungsblech vorhanden ist.

Durch die Erfindung ist es möglich, kleinere Traktoren einzusetzen, wodurch eine erhebliche Bodenentlastung erreicht wird. Die gemähten Faserflachspflanzen werden schonend auf einem Stoppelfeld abgelegt, welches
den sauberen, nichtgepreßten Flachspflanzen ein idealeres Lager für
Lufttrocknung und Röstvorgang bietet. Außerdem ist es durch die Erfindung möglich, Hanganbauflächen zu verwenden. Die Ernte kann von einer
Person mit hoher Flächenleistung durchgeführt werden. Der sinnlose Abtransport von Ackererde und wertvollem Felddünger durch Wurzel und
Stoppel entfällt, bei der Nachfolgefrucht ergibt sich eine Düngeeinsparung,da Wurzel und Stoppel am Acker verbleiben, und für die Faseraufbereitung ist durch den Wegfall der Wurzel- und Stengelbasis die Verschmutzung und Verstaubung beseitigt, so daß es eine massive Staubreduzierung gibt. Außerdem kann durch die sauberen und wenig belasteten
Flachsstengel die Produktionsgeschwindigkeit wesentlich erhöht werden.
Außerdem wird die Fasergüte gegenüber den bisherigen Verfahren verbessert und trotz des Faserverlustes an der Stengelbasis wird der Gesamtverlust erheblich reduziert.

Die Erfindung wird nun anhand der Zeichnungen näher beschrieben.

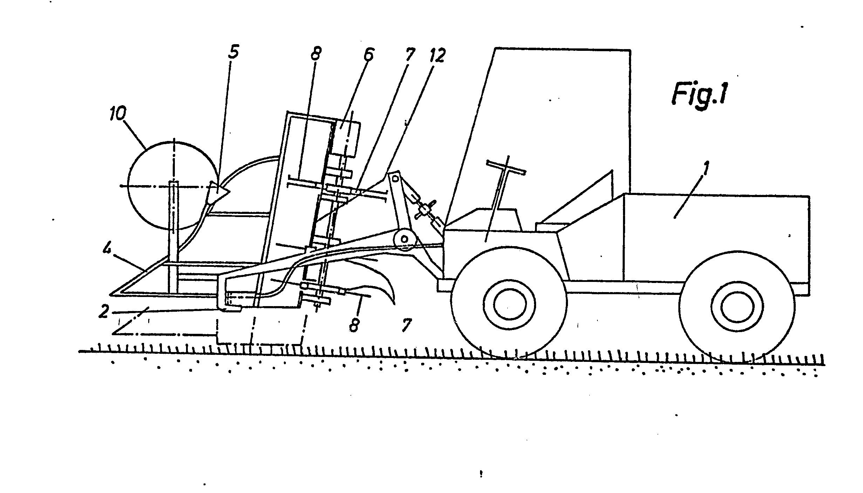

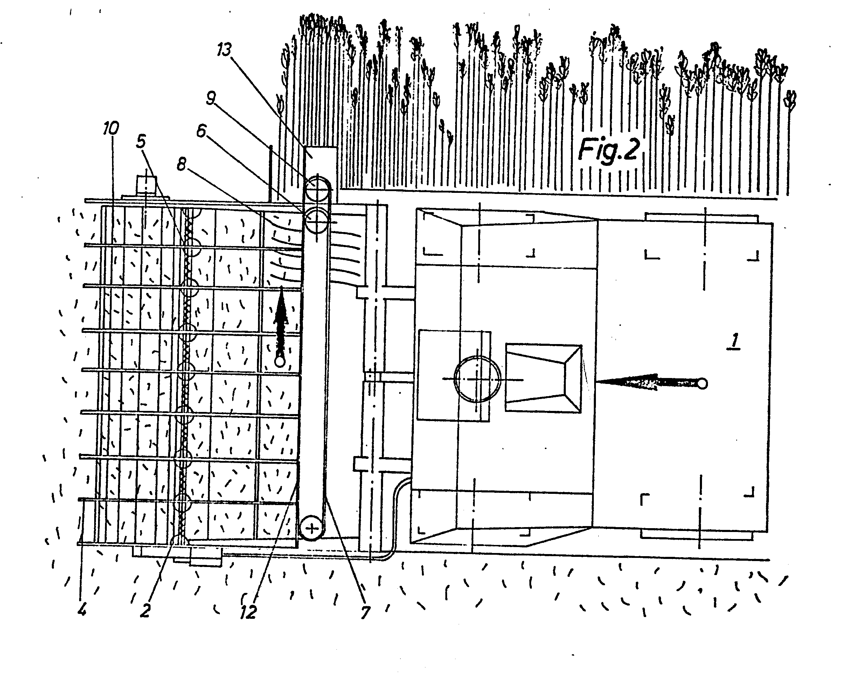

Fig.1 stellt eine Seitenansicht auf die Anordnung zur Faserflachsernte dar und Fig.2 ist eine Draufsicht zur Fig.1.

An einem Traktor 1, der mit Allradantrieb und besonders niedrigem Bodendruck erzeugenden Ballonreifen ausgestattet ist, wird ein Mähwerk
2 angebaut. Dieses Mähwerk 2 ist über die Hydraulikanlage des Traktors 1 heb- und senkbar, dies ist strichliert in der Fig.1 angedeutet.
Der Antrieb des Mähwerkes 2 erfolgt über einen Hydraulikmotor vom Traktor 1 aus.

Am Mähwerk 2 sind Teilerleitbögen 4 korbartig zusammengefaßt angebaut,
welche den am Feld 3 stehenden Faserflachs in entsprechende Bereiche des
Mähwerkes 2 aufteilen. Häufig sind die Spitzen des Faserflachses mit den
benachbarten Stengeln vermengt und es sind daher im vorliegenden Fall
Trenneinrichtungen, wie Trennkonusse 5, vorgesehen. In der Zeichnung ist
nur eine Reihe derartiger Trennkonusse 5 gezeigt, jedoch ist es möglich,
mehrere derartige Reihen vorzusehen. Nicht senkrecht stehende Faserflachsstengel werden durch eine Haspel 10 aufgerichtet, so daß jegliche Verwirrung der Stengel vermieden ist. Nachdem die Flachsstengel durch die
Teilerleitbögen 4 in Bahnen getrennt, deren Spitzen durch die Trennkonusse entwirrt und durch die Haspel 10 zwangsweise aufgerichtet worden sind,
werden sie vom Mähwerk 2 abgeschnitten. Danach werden die Stengel infolge der Bewegung des Traktors 1 und aufgrund des Druckes der nachfolgend
abgeschnittenen Stengel zu einer senkrecht oder leicht schräg nach hinten
verstellbaren Prallwand 12 gebracht.

Vor dieser Prallwand 12 werden die Faserflachsstengel stehend gesammelt
und dann seitlich durch Förderbänder 7 mit vorstehend etwas gebogenen
Drahthaken 8 entfernt. Im vorliegenden Fall sind drei Förderbänder vorgesehen. Die Transportgeschwindigkeit der Förderbänder 7 ist mit der
Fahrgeschwindigkeit des Traktors 1 so abgestimmt, daß die Flachsstengel
über seitliche Führungsbleche 13 seitlich außerhalb des Mähwerkes und des Traktors über eine Ablagemulde abgleiten und schließlich quer zur
Fahrtrichtung auf dem durch das Mähen entstandenen Stoppelfeld 11
zu liegen kommen. Es sei noch erwähnt, daß die Enden der Teilerleitbögen       bis knapp, z.B. 0,5 bis 1 cm, vor die aus der Prallwand 12 ragenden Drahthaken 8 reichen und in Transportrichtung der
Förderbänder 7 leicht gebogen sind. Es ist so möglich, daß die geschnittenen Flachsstengel, welche vor dem Eingriff mit den Drahthaken nur von den Teilerleitbogen berührt werden, schonend und ohne
Pressung auf dem Stoppelfeld 11 abgelegt werden. Die Schnittbreite
des Mähwerkes ist so ausgelegt, daß sie größer ist als die durchschnittliche Länge eines Flachsstengels, also z.B. 2 m beträgt,
wobei die durchschnittliche Länge der Flachsstengel 1,1 m aufweist.
Es entsteht so zwischen den abgelegten Flachsreihen eine breite Fahrrinne 14 und bei den nachfolgenden Arbeitsgängen kann dieser freibleibende Raum als Fahrspur ohne Schädigung des Flachses benützt werden,
wodurch auch die auf dem Stoppelfeld 11 liegenden Schwaden geordnet
bleiben.

Die Förderbänder 7 haben einen Antrieb 6 und werden über eine Umlenkrolle 9 geführt, die ebenfalls außerhalb der Schnittbreite des Mähwerkes 2 liegt.

Es hat sich als günstig herausgestellt, wenn der Schnitt der Flachsstengel in einer Höhe zwischen 3 bis 5 cm über dem Boden erfolgt, da
dann ein optimales Lager für den abgelegten Flachs entsteht, wobei
eine bessere Lufttrocknung und bessere Röstbedingungen gegeben sind.

Das Abschneiden der Flachsstengel ist mit wesentlich geringerem Energieaufwand möglich als beim bisherigen Ausreißen, wodurch der Einsatz
der Arbeitsaggregate nicht auf annähernd ebenes Gelände beschränkt
bleibt, sondern in vorteilhafter Weise auch bei Hanglagen, also im
Bergbauerngebiet, Verwendung finden kann.

Durch die erfindungsgemäße Vorgangsweise verkürzt sich der Trocken-

und Tauröstprozeß um mindestens eine Woche. Um aber zusätzlich den Röstprozeß zu fördern, wird auf die Flachsstengelschwaden eine entsprechende Enzymflotte (Pankreastypen), welche mit Schwefelsäure auf den erforderlichen pH-Wert gebracht wird, aufgesprüht. Je nach Wetter wird nach etwa 2 Wochen der auf dem Stoppelfeld 11 liegende Flachs gewendet und gegebenenfalls nochmals mit Flotte besprüht. Durch die vorteilhafte Ablagerung der Flachsschwaden kann die Anzahl der Wende- und Sprühvorgänge den Witterungsverhältnissen gut angepaßt werden. Anhaltend nasses Wetter macht zur Fasergütesicherung unter Umständen ein mehrmaliges Wenden notwendig. Dies ist jedoch bei dieser bodenschonenden Ernteart jederzeit möglich.

Ist der Trocken- und Röstprozeß beendet, so können die Flachsstengel nunmehr einer leichten Pressung ausgesetzt werden, da bei richtiger Röste durch Lösen (Zersetzung) des Bastkittes die Fasern bereits eine bestimmte unabhängige Belastungskapazität besitzen.

Patentansprüche:

1. Faserflachsernteverfahren, dadurch gekennzeichnet, daß die Faserflachspflanzen aufgerichtet und entwirrt werden, daß dann die Faserflachspflanzen im Abstand über dem Boden gemäht und die gemähten Faserflachspflanzen auf dem gebildeten Stoppelfeld abgelegt werden, wobei vorzugsweise Fahrspuren freigehalten werden, wobei dann nach gegebener Zeit eine Weiterverarbeitung erfolgt.

2. Verfahren nach Anspruch 1, dadurch gekennzeichnet, daß die Faserflachspflanzen vor dem Mähen in Bahnen aufgeteilt werden.

3. Verfahren nach Anspruch 1 oder 2, dadurch gekennzeichnet, daß die Faserflachspflanzen quer zur Mährichtung abgelegt werden.

4. Verfahren nach einem der vorhergehenden Ansprüche, dadurch gekennzeichnet, daß auf die auf dem Stoppelfeld abgelegten Faserflachspflanzen mit einer Flotte, die Enzyme enthält, gesprüht wird.

5. Anordnung zur Durchführung des Verfahrens nach einem der Ansprüche 1 bis 4, dadurch gekennzeichnet, daß an einem Traktor (1) in an sich bekannter Weise ein Mähwerk (2) angeordnet ist, an das Teilerleitbögen (4) korbartig zusammengefaßt angebaut sind, daß vor dem Mähwerk (2) Einrichtungen zum Trennen der Faserstengel, wie Trennkonusse (5), und eine Haspel (10) angeordnet sind, daß hinter dem Mähwerk (2) eine Prallwand (12) vorgesehen ist, daß parallel zur Prallwand (12) mindestens ein Förderband (7) mit Mitnehmern (8) vorgesehen ist und an der Umlenkstelle (9) des oder der Förderbänder ein Führungsblech (13) vorhanden ist.

6. Anordnung nach Anspruch 5, dadurch gekennzeichnet, daß das oder die Förderbänder (7) über die Breite des Mähwerkes (2) und des Traktors (1) hinausragen.

7. Anordnung nach Anspruch 6, dadurch gekennzeichnet, daß die Schnittbreite des Mähwerkes (2) größer ist als die durchschnittliche Höhe der Faserflachspflanzen.

8. Anordnung nach einem der Ansprüche 5 bis 7, dadurch gekennzeichnet, daß die Schnitthöhe 3 bis 5 cm beträgt.

Fig.1

0205418

Fig.2

**Europäisches Patentamt**

## EUROPÄISCHER RECHERCHENBERICHT

| | EINSCHLÄGIGE DOKUMENTE | | EP 86890172.9 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| X | GB - A - 2 123 266 (KUBOTA, LTD.)<br>* Anspruch 1; Fig. 1,3,5 *<br>-- | 1-3 | A 01 D 45/06<br>A 01 D 34/00 | |
| A | GB - A - 2 009 575 (KUBOTA LTD.)<br>* Ansprüche 1,2; Fig. 1 *<br>-- | 1-3 | | |
| A | US - A - 3 531 921 (KABUSHIKI KAISHA, OSAKA-SHI, NANIWA-KU)<br>* Fig. 1,3,6,7,44 *<br>---- | 1-3,5, 6,8 | | |

| RECHERCHIERTE SACHGEBIETE (Int. Cl.4) |
|---|
| A 01 D 63/00 |
| A 01 D 57/00 |
| A 01 D 55/00 |
| A 01 D 45/00 |
| A 01 D 34/00 |
| A 01 F 11/00 |

Der vorliegende Recherchenbericht wurde für alle Patentansprüche erstellt.

| Recherchenort | Abschlußdatum der Recherche | Prüfer |
|---|---|---|
| WIEN | 28-07-1986 | MENTLER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument